# EUROPEAN PATENT APPLICATION

(11) **EP 4 231 145 A1**
(43) Date of publication of application: **23.08.2023**
(21) Application number: 21891148.5
(22) Date of filing: 10.11.2021
(51) Int. Cl.: G06F 9/451

(54) **VIEW DISPLAY METHOD AND APPARATUS FOR TABLE, AND ELECTRONIC DEVICE**

(30) Priority: 11.11.2020 CN 202011264404
(71) Applicant: Beijing Zitiao Network Technology Co., Ltd., Beijing 100190 (CN)
(72) Inventor: YU, Cenning, Beijing 100190 (CN); ZHANG, Xinxin, Beijing 100190 (CN); HUANG, Zhihua, Beijing 100190 (CN); XU, Shimin, Beijing 100190 (CN)
(74) Representative: Dentons Patent Solutions Rechtsanwaltsgesellschaft mbH
(86) International application number: PCT/CN2021/129884
(87) International publication number: WO 2022/100628

(57) **Abstract**

A method and device for performing view displaying on a table, and an electronic device are provided according to the disclosure. A specific implementation of the method includes: receiving an editing instruction of a user on a target image bar in a target view, where the target view is generated based on target data in a preset data table; and editing the target image bar based on the editing instruction. In this way, the user can edit the target image bar in the target view through the editing instruction, so as to edit the target data corresponding to the target image bar, which improves an editing efficiency and a user experience.

## Description

### CROSS REFERENCE TO RELATED APPLICATION

The present application claims priority to Chinese Patent Application No. 202011264404.3, titled "METHOD AND DEVICE FOR PERFORMING VIEW DISPLAYING ON TABLE AND ELECTRONIC DEVICE", filed on November 11, 2020, which is incorporated herein by reference in its entirety.

### TECHNICAL FIELD

The present disclosure relates to the field of Internet technologies, and in particular, to a method for performing view displaying on a table, a device for performing view displaying on a table, and an electronic device.

### BACKGROUND

People have become accustomed to us i ng table tools to manage data in the i r daily work. Table tools can help people to efficiently record and manage data, but due to the relatively simple data organization form of table tools, for some special scenarios, such as project management scenarios, these recording and management functions are difficult to help people effectively coordinate and manage a project.

Therefore, a management view based on the table tool is provided accord ingly, which can graphically represent a task sequence, duration and other information of the project, and then can enable people to better manage the project.

### SUMMARY

This summary is provided to introduce concepts in a simplified form, the concepts are described in detail in the detailed description of the embodiments below. This summary is not intended to identify key features or essential features of the claimed technical solution, nor is it intended to be used to limit the scope of the claimed technical solution.

A method for performing view displaying on a table, a device for performing view displaying on a table, and an electronic device are provided according to embodiments of the present disclosure.

In a first aspect, a method for performing view displaying on a table is provided according to an embodiment of the present disclosure. The method includes: receiving an editing instruction of a user on a target image bar in a target view, where the target view is generated based on target data in a preset data table; and editing the target image bar based on the editing instruction.

In a second aspect, a device for performing view displaying on a table is provided according to an embodiment of the present disclosure. The device includes: a receiving module, configured to receive an editing instruction of a user on a target image bar in a target view, where the target view is generated based on target data in a preset data table; and an editing module, configured to edit the target image bar based on the editing instruction.

In a third aspect, an electronic device is provided according to an embodiment of the present disclosure. The electronic device includes one or more processors and a storage apparatus storing one or more programs. The one or more programs, when executed by the one or more processors, cause the one or more processors to perform the method for performing view displaying on a table described in the above first aspect.

In a fourth aspect, a computer-readable medium is provided according to an embodiment of the present disclosure. The computer-readable medium stores a computer program. The computer program, when executed by a processor, causes the processor to perform the method for performing view displaying on a table described in the above first aspect.

According to the method for performing view displaying on a table, the device for performing view displaying on a table and an electronic device provided in the embodiments of the disclosure, an editing instruction of a user on a target image bar in a target view is received, where the target view is generated based on target data in a preset data table; and the target image bar is edited based on the editing instruction. In this way, the user can edit the target image bar in the target view through the editing instruction, so as to edit the target data corresponding to the target image bar, which improves an editing efficiency and a user experience.

### BRIEF DESCRIPTION OF THE DRAWINGS

With reference to the drawings and specific embodiments below, the above and other features, advantages and aspects of embodiments of the present disclosure become more apparent. Throughout the drawings, the same or similar reference numerals indicate the same or similar elements. It should be understood that the drawings are schematic, and components and elements are unnecessarily drawn in scale.
Figure 1 is a flowchart of a method for performing view displaying on a table according to an embodiment of the present disclosure;
Figure 2 is a flowchart of a method for performing view displaying on a table according to another embodiment of the present disclosure;
Figure 3 is a schematic structural diagram of a device for performing view displaying on a table according to an embodiment of the present disclosure;
Figure 4 is an exemplary system architecture to which a method for performing view displaying on a table according to an embodiment of the present disclosure may be applied; and
Figure 5 is a schematic diagram of a basic structure of an electronic device according to an embodiment of the present disclosure.

### DETAILED DESCRIPTION OF THE EMBODIMENTS

Embodiments of the present disclosure are described in detail hereinafter with reference to the drawings. Although the drawings show some embodiments of the present disclosure, it should be understood that the present disclosure may be implemented by various embodiments and are not limited to be implemented by the embodiments clarified herein. The embodiments described in the present disclosure are intended to illustrate the present disclosure thoroughly and completely. It should be understood that the drawings and the embodiments are only schematic, and are not intended to limit the protection scope of the present disclosure.

It should be understood that, steps described in the method embodiments of the present disclosure may be performed in different orders and/or performed in parallel. In addition, the method embodiments may include additional steps and/or the shown steps may be omitted. The scope of the present disclosure is not limited thereto.

Term "including" and variations thereof adopted herein is inclusive, that is "including but not limited to". The term "based on" means "at least partial ly based on". The term "one embodiment" means "at least one embodiment", and the term "another embodiment" means "at least one another embodiment". The term "some embodiments" means "at least some embodiments". Definitions of other terms are provided below.

It should be noted that, the terms "first"' "second" and so on mentioned in the present disclosure are only used to distinguish different apparatuses, modules or units, rather than limit an order of functions performed by the apparatus, module or unit or limit interdependence.

It should be noted that, the terms "a" and "multiple" mentioned in the present disclosure are schematic rather than restrictive, and should be understood as "one or more" by those skilled in the art, otherwise explicitly illustrated in the context.

Names of messages or information interacted between multiple apparatuses in the embodiments of the present disclosure are illustrative rather than limit the scope of the message or information.

It should be noted that the embodiments of the present disclosure and the features of the embodiments may be combined with each other without conflict.

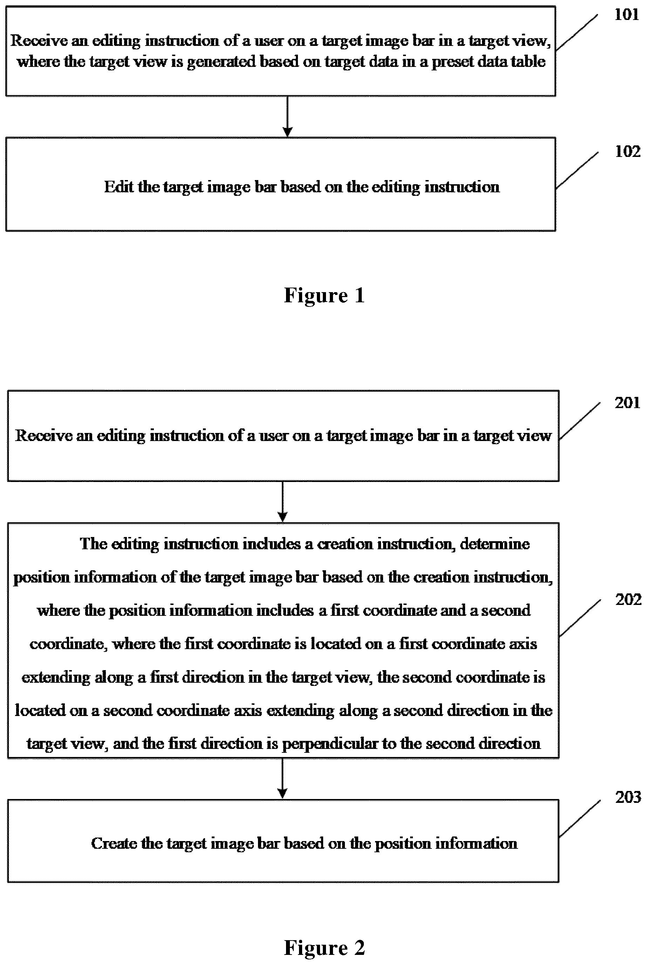

Reference is made to Figure 1, which shows a flowchart of a method for performing view displaying on a table according to an embodiment of the present disclosure. As shown in Figure 1, the method for performing view displaying on a table includes the following steps 101 to 102.

In step 101, an editing instruction of a user on a target image bar in a target view is received. The target view is generated based on target data in a preset data table.

The user may send the editing instruction for editing the target image bar in the target view displayed by a terminal device. The above-mentioned terminal device may include, but is not limited to, a personal computer, a mobile phone, a tablet computer, and the like.

The above target view may be generated based on target data in a preset data table. For example, when a Gantt chart view is used as the target view, the Gantt chart view may be generated based on the target data in a data table associated with the Gantt chart view. The target data here may include, for example, task data, time data. Accordingly, the target image bar may be used, for example, to characterize the duration of a task in the Gantt chart view.

In some application scenarios, the user may perform an operation of clicking the target image bar or triggering a preset editing control, and when the terminal device detects the foregoing operation, it may be deemed that the foregoing editing instruction is received. In these application scenarios, the editing instruction may include, for example, a creation instruction, a deletion instruction, or an adjustment instruction for the target image bar.

In step 102, the target image bar is edited based on the editing instruction.

After receiving the above-mentioned editing instruction, a corresponding editing operation may be performed on the target image bar based on the editing instruction. In some application scenarios, the target image bar may be deleted when the editing instruction is used to instruct to delete the target image bar. In other application scenarios, the editing instruction may be used to instruct to adjust a display position of the target image bar. The display position of the target image bar in the target view may be adjusted through the editing instruction, so that data information corresponding to the target image bar may be adjusted. In these application scenarios, the user can, for example, adjust the target image bar by a clicking operation on the target image bar. After detecting the clicking operation, the terminal device may display an adjustment state in which the target image bar may be adjusted, and then the user may adjust the display pos it ion of the target image bar as required.

In this embodiment, an editing instruction of a user on a target image bar in a target view is received first, where the target view is generated based on target data in a preset data table; and then the target image bar is edited based on the editing instruction. In this way, the user can edit the target image bar in the target view through the editing instruction, so as to edit the target data corresponding to the target image bar, which improves an editing efficiency and a user experience.

Reference is made to Figure 2, which shows a flowchart of a method for performing view displaying on a table according to another embodiment of the present disclosure. As shown in Figure 2, the method for performing view displaying on a table includes the following steps 201 to 203.

In step 201, an editing instruction of a user on a target image bar in a target view is received.

In this embodiment, the foregoing step 201 may be the same as or similar to the step 101 in the embodiment shown in Figure 1, and detai Is are not described herein.

In step 202, the editing instruction includes a creation instruction, position information of the target image bar is determined based on the creation instruction. The position information includes a first coordinate and a second coordinate. The first coordinate is located on a first coordinate axis extending along a first direction in the target view, the second coordinate is located on a second coordinate axis extending along a second direction in the target view, and the first direction is perpendicular to the second direction.

The user may send a creation instruction for creating the target image bar. In some appl i cat ion scenarios, the user may perform a triggering operation on a creation control for representing creation of the target image bar in the target view displayed on the terminal device, so as to send the above creation instruction. After receiving the creation instruction, the terminal device may determine the position information of the target image bar.

The target view may include the first coordinate axis and the second coordinate axis. Two coordinate axes that are perpendicular to each other may form a coordinate system. The coordinate system may be used to characterize the position information of the target image bar. Specifically, the position information of the target image bar may include the first coordinate and the second coordinate, such as a coordinates (1, 2), a coordinates (1, 3).

In step 203, the target image bar is created based on the position information.

After the position information of the target image bar to be created is determined, the target image bar may be created in the target view. For example, when the position information is determined to be the coordinate (1, 2), the target image bar may be a point on the coordinate.

In some optional implementations, the position information includes a start position and an end position; and the above step 202 may include steps 2021 to 2022.

In step 2021, a position selection operation of the user in the target view is received, and a start coordinate and an end coordinate indicated by the pos it ion selection operat ion are acquired. Each of the start coordinate and the end coordinate includes a first coordinate and a second coordinate.

The user may perform the position selection operation in the target view to determine the coordinate information corresponding to the target image bar. The position selection operation here may include, for example, an operation of clicking the displayed target view through a mouse, a stylus. After detecting the position selection operation, the terminal device may detect the coordinate information of a position where the cursor is located at the current moment or the coordinate information of a position touched by the stylus, and the coordinate information is regarded as the start coordinate. For example, the user may click the position corresponding to the first coordinate "1" and the second coordinate "2", and after detecting the position selection operation, the coordinate (1, 2) may be used as the above-mentioned start coordinate.

After the start coordinate is determined by detecting a first position selection operation performed by the user, a second position selection operation of the user may be monitored to determine the end coordinate. For example, the user may click the position corresponding to the first coordinate "1" and the second coordinate "3", and after detecting the position selection operation, the coordinate (1, 3) may be used as the above-mentioned end coordinate.

In step 2022, the start coordinate is taken as the start position, and the end coordinate is taken as the end position.

After the start coordinate and the end coordinate are determined, the start coordinate may be regarded as the start position of the target image bar, and the end coordinate may be regarded as the end position of the target image bar.

In this embodiment, the user can quickly create the target image bar through the pos it i on selection operat ion, which improves the creation efficiency and is more convenient and practical.

In some optional implementations, the second coordinate axis is a time axis and the second coordinate is a time coordinate, and the step 203 may include steps 2031 to 2032.

In step 2031, a time dimension corresponding to the time axis is determined.

When creating the target image bar, the time dimension corresponding to the time axis may be determined first. The time dimension here may include, for example, dimensions such as year, quarter, month, and day.

In step 2032, the target image bar is created based on the time dimension and the position information.

After the time dimension is determined, the target image bar may be created based on the position information. For example, when a time interval corresponding to the posit ion information is 5 days, a target image bar occupying 5 time coordinates in the time axis, whose time dimension is "day", may be automatically created. In this way, it is more beneficial to create a more beautiful and reasonable target image bar.

In some optional implementations, the second coordinate axis is a time axis and the second coordinate is a time coordinate, and after the step 203, the method for performing view displaying on a table further includes following steps. Firstly, switched time dimension is determined, in response to receiving an instruction for switching a time dimension of the time axis.

After the time dimension of the time axis is switched, the switched time dimension may be determined. For example, when receiving a switching instruction for switching from a time dimension being "week" to a time dimension being "day", it may be determined that the switched time dimension is "day".

Then the target image bar is adjusted based on the switched time dimension.

After the switched time dimension is determined, the target image bar may be adjusted according to the current time dimension. For example, when it is determined that the switched time dimension is "day", if the time interval corresponding to the target image bar is two weeks corresponding to a time interval from October 15 to October 29, the target image bar may be adjusted to 14 days corresponding to the time interval from October 15 to October 29. In this way, when the time dimension is changed, the target image bar is also changed correspondingly, which can make the size of the target image bar more reasonable and facilitate the user to browse.

In some optional implementations, the target view includes a task axis extending along a first direction and a time axis extending along a second direction, the first direction is perpendicular to the second direction, the editing instruction includes a position adjustment instruction for the target image bar displayed in the target view, and the above step 102 may include: step 1021, adjusting, in response to detecting that the user performs a position adjustment operation on the target image bar along the time axis, a time interval corresponding to the target image bar based on the pos it ion adjustment operat ion.

In some application scenarios, the user may adjust the time interval corresponding to the target image bar by performing a position adjustment operation for adjusting the display position of the target image bar. Specifically, the user may adjust the time coordinate of the target image bar on the time axis to adjust a duration corresponding to the target image bar. For example, the start position corresponding to the target image bar a is (1, February 1), and the end position is (1, March 1). The coordinate "1" here may be regarded as a task coordinate corresponding to task A. Then, the time interval corresponding to the target image bar a is from February 1 to March 1. When it is detected that the user performs a position adjustment operation on the target image bar a, the specific adjustment content performed by the user on the target image bar may be further detected. For example, the user may move the target image bar a from the position (1, February 1, March 1) to the position (1, May 1, June 1). In this way, the time interval corresponding to the target image bar a may be adjusted from a time interval from February 1 to March 1 to a time interval from May 1 to June 1.

The user may adjust the time information of the target image bar in the target view by adjusting the display position of the target image bar, which is more intuitive and convenient.

In some optional implementations, the foregoing step 1021 may include the following steps 1 and 2, or include the following steps 3 and 4.

In step 1, a time coordinate corresponding to the target image bar after being dragged is acquired in response to detecting that the user drags a first position of the target image bar along the time axis.

In some application scenarios, a drag operation performed by the user on the target image bar a long the time axis may be detected. When it is detected that the user drags the first position of the target image bar along the time axis, the time coordinate corresponding to the target image bar after being dragged may be obtained. Specifically, when it is detected that the user drags a certain target image bar, the target image bar may be determined as an image bar whose duration is to be changed, so that the time coordinate corresponding to the target image bar after being dragged may be obtained. For example, when it is detected that the user drags the first position of the target image bar a corresponding to a task, with task information being task A, a start time coordinate being February 1 and an end time coordinate being February 5, along the time axis, it is considered that the user wants to change the duration corresponding to the target image bar a. When it is detected that the target image bar a is dragged to the position with the start time coordinate being March 1 and the end time coordinate being March 5, the time coordinate (March 1, March 5) may be regarded as the time coordinate corresponding to the target image bar a after being dragged. The first position here may include, for example, the middle part of the target image bar.

In step 2, the target image bar is moved based on the time coordinate corresponding to the target image bar after being dragged, to change the time interval corresponding to the target image bar.

After the time coordinate corresponding to the target image bar after being dragged is obtained, the target image bar may be moved to a position corresponding to the time coordinate. After the target image bar is moved, the time information corresponding to the target image bar after being moved may be used as the time interval corresponding to the task. For exampIe, after dragging the above target image bar a, it may be determined that the current time interval of task A is a time interval from March 1 to March 5 based on the time coordinate (March 1, March 5) corresponding the target image bar after being dragged. In this way, the user may adjust the display position of the target image bar on the time axis, and then may adjust the time interval corresponding to the target image bar, which is convenient and quick.

In step 3, a time coordinate corresponding to a first edge of the target image bar after being dragged is acqu i red in response to detecting that the user drags a second position of the target image bar along the time axis.

In some application scenarios, a drag operation performed by the user on the target image bar a long the time axis may be detected. When it is detected that the user drags the second position of the target image bar along the time axis, the time coordinate corresponding to the first edge of the target image bar after being dragged may be obtained. For example, the start position corresponding to the target image bar a is (1, February 1), and the end position corresponding to the target image bar a is (1, March 1). Then, the time interval corresponding to the target image bar a is a time interval from February 1 to March 1. When it is detected that the user drags the second position of the target image bar a, the time coordinate corresponding to the first edge of the target image bar after being dragged may be further detected. In these application scenarios, when the user adjusts the first edge of the target image bar, a coordinate of a second edge of the target image bar that is not dragged may be kept unchanged. That is, when dragging the first edge corresponding to the start time coordinate, the second edge corresponding to the end time coordinate may be kept unchanged; when dragging the first edge corresponding to the end time coordinate, the second edge corresponding to the start time coordinate may be kept unchanged. As a preferred manner of the embodiment, the first edge may also be set to an ad justable state. The adjustable state here may include, for example, setting the first edge to a different color from other sides, or adjusting the edge line of the first edge to a state of a dashed line that is different from other edges. The second position here may include, for exampIe, a position corresponding to the first edge.

In step 4, the first edge of the target image bar is moved based on the time coordinate corresponding to the first edge of the target image bar after being dragged, to change the time interval corresponding to the target image bar.

After the time coordinate corresponding to the target image bar after being dragged is obtained, the first edge of the target image bar may be moved. For example, the display position of the target image bar a, with a start position being (1, February 1) and an end position being (1, March 1) may be dragged to have a start time coordinate of February 1 and an end time coordinate being February 25th. In this way, after the target image bar is dragged, the time interval corresponding to the target image bar is also changed accordingly.

In the related art, when adjusting the duration corresponding to the task, the adjustment is often performed by resetting the start time information and the end time information. This embodiment enables the user to adjust the duration corresponding to the target image bar by adjusting the position of the target image bar in the time axis, which is more intuitive and convenient.

In some optional implementations, the target view includes a task axis extending along a first direction and a time axis extending along a second direction, the first direction is perpendicular to the second direction, and the step 102 may further include step 1 and step 2.

In step 1, information of a target task associated with the target image bar is determined based on a first task coordinate corresponding to the target image bar on the task axis.

The first task coordinate corresponding to the target image bar on the task axis may be detected, and the information of the target task associated with the first task coordinate may be determined. For example, when it is detected that the first task coordinate corresponding to the target image bar b is the task B, the task B may be regarded as the target task corresponding to the image bar b. The information of the target task B may include a task name "development task" of the target task B. In some application scenarios, the information of target task B may also include information about a task follower, a task progress, and the like.

In step 2, the target image bar is moved to a time interval corresponding to a second task coordinate on the task axis, and the information of the target task is moved to the second task coordinate along the task axis.

In some appl i cat ion scenarios, the time interval of the target image bar under the first task coordinate may be determined, and then after the second task coordinate is detected, the target image bar may be moved from the time interval under the first task coordinate to the time interval under the second task coordinate. For example, the time interval of the target image bar b under the first task coordinate "1" is from January 10 to January 20, then the coordinate of the target image bar in the target view may be (1, January 10, January 20), the first task coordinate "1" here may be, for example, the task coordinate corresponding to the "development task". When it is detected that the second task coordinate is the task coordinate "2" corresponding to the blank task C, the target image bar b may be moved from the coordinate (1, January 10, January 20) to the coordinate (2, January 10, January 20). The blank task C here may be a task without the information of editing tasks.

In these application scenarios, the information of the target task may also be moved to the second task coordinate along the task axis. For example, the information of the target task corresponding to the target image bar b may be moved to the position corresponding to the blank task C. At this time, the information cor responding to the blank task C may be f i I led with the information corresponding to the above-mentioned task B.

In the related art, when moving the information of the target task, it is often necessary to refill the information of the target task in the blank task coordinate, and then delete the information of the target task in the original task coordinate. In this embodiment, the user may move the target image bar and also move the information of the target task by dragging the target image bar along the task axis, so that the transformation process for the display position of the target image bar and the information of the target task is more convenient and faster.

In some optional implementations, the first task coordinate and the second task coordinate correspond to different task groups; and the above step 2 may include: moving the target image bar from a time interval under the first task coordinate in a first group to a time interval under the second task coordinate in a second group, and moving the information of the target task to the second task coordinate along the task axis.

In some application scenarios, the first task coordinate and the second task coordinate may correspond to different task groups. For example, the task B corresponding to the first task coordinate and the blank task C corresponding to the second task coordinate may be long to different task groups. The task group here may include, for example, a first group whose progress status is "in progress" and a second group whose progress status is "completed". In this way, after moving the target image bar and the information of the target task along the task axis, the progress status of the information of the target task may be changed from "in progress" to "completed". In this way, when the status of a certain target task changes, the user may change the status information of the target task by dragging the target image bar along the task axis, which is convenient for the user to manage the target task conveniently.

In some optional implementations, the target view includes a task axis extending along a first direction and a time axis extending along a second direction, the first direction is perpendicular to the second direction, and the method for performing view displaying on a table further includes steps 103 and 104.

In step 103, a preset control is presented in response to detecting that the user performs a preset operation on a target time coordinate on the time axis.

The user may perform the above-mentioned preset operation on the main time point in the progress of the task, so as to draw the attention of the task-related personnel to the main time point. The preset operation here may include, for example, operations such as clicking, touching, and long pressing on the target time coordinate. After detecting the above-mentioned preset operation, the terminal device may present the above-mentioned preset control to the user.

In step 104, a target information identifier is set at the target time coordinate in response to a triggering operation on the preset control performed by the user.

The user may trigger the preset control through triggering operations such as clicking, touching, and long pressing. After the terminal device detects the triggering operation, the target information identifier may be added at the target time coordinate. Here, when the target view is a Gantt chart view, the above target information identifier may include, for exampIe, a milestone identifier.

In the related art, when the user sets the target information identifier at the target time coordinate, he often needs to search for the option in at least one selection box containing the option including a function of setting the target information identifier. The search path is long and the search process is complicated. In this embodiment, the user can set the target information identifier by triggering the preset control, the setting process is smooth, and the operation is simple.

In some optional implementations, the target information identifier includes graphic identification information and/or text identification information; and the above step 104 may include: setting graphic identification information parallel to the task axis at the target time coordinate; or setting graphic identification information extending in a specific direction and parallel to the task axis at the target time coordinate, and setting text identification information at a start point or an end point of the graphic identification information.

In some application scenarios, graphic identification information and/or text identification information may be set at the target time coordinate to identify the cor respond i ng target time, to remind the task-related personnel. The graphic identification information here may include, for example, common shapes such as rectangles and circles, and may also include graphics consistent with shapes such as flags and snowflakes. The text identification information here may include, for example, text information such as "important node" and "special time" that can actually attract the attention of the task-related personnel. In these application scenarios, the target information identifier may be set by setting graphic identification information parallel to the task axis, graphic identification information extending in a specific direction and parallel to the task axis, or setting text identification information at the start or end point of the graphic identification information. Here, the graphic identification information extending in a specific direction and parallel to the task axis may include, for example, linear identification information such as straight lines and curves.

In some optional implementations, the method for performing view displaying on a table further includes following steps. Firstly, a presentation list is displayed in response to receiving an adding instruction for adding a target presentation item in the target view.

In some application scenarios, the user may add the target presentation item in the target view to present more task information. The target presentation item here may include, for example, task follower information, task progress information, task remark information. For example, the above-mentioned adding instruction may be issued through a clicking operation on a preset new button such as "new presentation item", "add presentation item". After the terminal device detects the clicking operation, it may be regarded as that the above-mentioned adding instruction is received. At this point, the above-mentioned presentat ion list may be presented to the user. The presentat ion list here may present task attribute information such as task description information, task start time information, and task end time information that have been added; may also present only the task attribute information currently added by the user.

Secondly, task attribute information newly added by the user in the presentation list is acquired, and the target presentation item is added based on the task attribute information.

The user may add task attribute information to the presented presentat ion list. After acquiring the newly added task attribute information, the terminal device may add a target presentation item according to the task attribute information. For example, after adding the task attribute information of "task follower" to the presentation list, the user may add a target presentation item to record the information of the task fol lower "Zhang San" corresponding to task A, and the information of the task follower "Li Si" correspond ing to task B and so on.

By the step of presenting the presentat ion list to the user so that the user can add task attribute information in the presentation I ist, the user can quickly add the target presentat ion item, the task information is more detailed and specific, and it is convenient for the user to manage the task information.

In some optional implementations, the method for performing view displaying on a table further includes following steps. Firstly, a modification instruction for target view data in the target view is received from the user, and modified new view data is acqu i red, where the target view data includes target presentation data in a presentation item corresponding to any task attribute information, the presentation item includes the target presentation item.

The user may modify the target view data in the target view, and input or select new view data. The target view data here may include, for example, the above-mentioned follower "Zhang San". The user may modify "Zhang San" to "Li Si" in the target view, where "Li Si" may be regarded as the above-ment ioned new view data.

Then original target data in the preset data table is modified based on the new view data.

After acqu i ring the new view data, the cor responding original target data in the preset data table may be modified. For example, "Zhang San" in the target view is derived from the original target data "Zhang San" in the preset data table. Then, after the target view data is modified, the original target data "Zhang San" may be modified to the new view data "Li Si". In this way, the user may modify the original target data in the preset data table by modifying the target view data, which is more convenient and practical.

In some optional implementations, the editing instruction includes a detail display instruction, and the above step 102 may include: presenting task detail information corresponding to the target image bar, in response to detecting that the user performs a preset display operation on the target image bar for instructing to display the task detai I information corresponding to the target image bar.

In some application scenarios, the user may perform the above preset display operation to obtain task detail information corresponding to the target image bar. The above-mentioned preset display operation may include, for example, double-clicking the target image bar, selecting an option for displaying task detai I information corresponding to the target image bar. After detecting the above preset display operation, the terminal device may present the corresponding task detail information to the user. The task detail information here may include, for example, task description information, task start time information, task end time information, task follower information, task progress information and other task detail information substantially corresponding to the target image bar. By performing the above preset display operation, the user may obtain the task detai I information, which is convenient for the user to manage the task in a macroscopic manner.

In some optional implementations, the editing instruction includes a deletion instruction, and the above step 102 may include following steps. Firstly, an editing selection option for the target image bar is presented based on a detected first selection operation performed by the user on the target image bar, where the editing selection option includes a deletion selection option.

The above-mentioned first selection operation may be, for example, a clicking operation on the target image bar performed by using the right mouse button.

When detecting the above-mentioned first selection operation on the target image bar, the terminal device may present the editing selection option corresponding to the target image bar to the user. The editing selection option here may include a deletion selection option, and may also include other opt ions such as a display selection option for displaying task detail information, a color setting selection option, a length adjustment selection option. The user may implement the corresponding function by selecting any one of the editing options. For example, the above display selection option may be selected to display the task detail information corresponding to the target image bar. The target image bar is deleted based on a second selection operation performed by the user on the deletion selection option.

After it is detected that the user performs the second selection operation on the deletion selection option, the target image bar may be deleted. After the target image bar is deleted, the start time information and the end time information respectively corresponding to the start position information and the end position information of the target image bar may be deleted accordingly. In this way, the user can delete the target image bar and then delete the task information corresponding to the target image bar, and the operation is simple.

ln some optional implementations, the target image bar is associated with corresponding target sub-data; and the above-mentioned deleting the target image bar based on a second selection operation performed by the user on the deletion selection option includes deleting the target image bar and the target sub-data based on the second selection operation performed by the user on the deletion selection option.

The target image bar may be associated with the target sub-data. In this way, the target sub-data may be changed with the edition on the target image bar performed by the user. The target sub-data here may be matched with the above task information.

In some applicat ion scenarios, if it is detected that the user performs the above-mentioned second selection operation on the above-mentioned deletion selection option, the target image bar may be deleted, and the target sub-data corresponding to the target image bar may also be deleted. For example, the task information corresponding to the target image bar a includes "task A", "task follower Zhang San", and "task progress has been completed", then when it is detected that the user performs the second deletion operation on the target image bar a, the target image bar a and the above-mentioned target sub-data such as "task A", "task follower Zhang San", and "task progress has been completed" may be deleted. In this way, when the user wants to delete a certain target sub-data, the purpose of deleting the target sub-data can be ach i eved by deleting the target image bar corresponding to the target sub-data, and the operation is simple and quick.

In some optional implementations, the above step 102 may include following steps. Firstly, the target image bar in the target view is moved, in response to receiving a position adjustment instruction included in the editing instruction.

The user may send the above position adjustment instruction to adjust the position information of the target image bar. After receiving the above position adjustment instruction, the target image bar may be moved according to the position indicated by the position adjustment instruction. For example, in the Gantt chart view, a position adjustment instruction, for instructing to move the target image bar d from the first task coordinates to the second task coordinate, may be received. At this time, the target image bar d may be moved from the first task coordinate to the second task coordinate, and here, the time coordinate corresponding to the target image bar d may remain unchanged.

Secondly, position information of the target image bar after being moved in the target view is acquired, and a first field data in a record page of the target image bar is modified based on the position information of the target image bar after being moved in the target view.

After the target image bar is moved, the position information of the target image bar after being moved may be acquired. For example, after the above-mentioned target image bar d is moved, the second task coordinate corresponding to the target image bar after being moved may be acquired.

After the position information of the target image bar after being moved is acquired, the above corresponding first field data in the record page may be modified. Here, the record page may be regarded as a page that records the first field data corresponding to the information data reflected by the target image bar. In some application scenarios, the first field data may be used to generate corresponding target data in the preset data table.

For example, if the task name correspond ing to the first task coordinate is "development task", the corresponding first field data in the current record page may be "development task". After moving from the first task coordinate to the second task coordinate, if the task name corresponding to the second task coordinate is "test task", the first field data in the record page may be correspondingly changed from "development task" to "test task". It should be noted that, after obtaining the position information of the target image bar after being moved, the information data reflected by the position information may be modified. The modification on the information data may also be performed when a confirmation instruction for instructing to confirming the modification of the above-mentioned information data is received. The specific modification may depend on the specific scene, and no limitation is made here.

When the position information of the target image bar is changed, the first field data in the record page may be changed accordingly, so that the user does not need to go to the record page to modify the first field data, which reduces the possibility of errors during modification, and improves the user experience.

In some optional implementations, the above step 102 may include: acquiring a second field data of the target image bar corresponding to the editing instruction; and modifying original target data in the preset data table based on edited second field data.

The above-mentioned second field data may include, for example, information data reflected by the target image bar, and the second field data may be associated with the original target data. That is, the second field data here may be consistent with the original target data in the preset data table for generating the target image bar. After the second field data of the target image bar is changed, the original target data corresponding to the second target field may be correspondingly changed. In this way, the user can change the corresponding original target data in the preset table data by changing the second field data corresponding to the target image bar, which reduces the probabi Nity of errors that may occur when modifying the corresponding target original data in the preset data table, and improves the user experience.

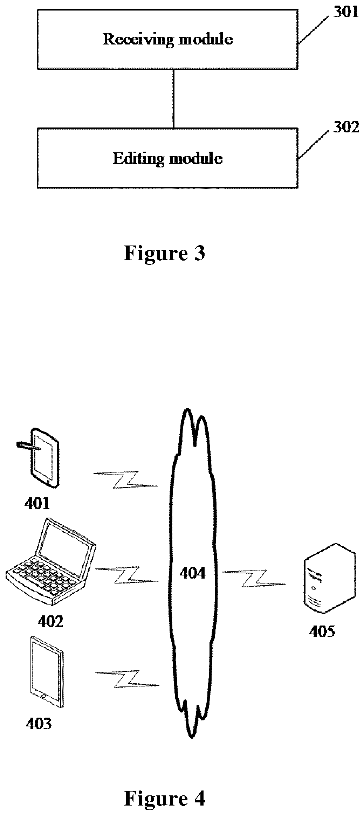

Reference is made to Figure 3, which shows a schematic structural diagram of a device for performing view displaying on a table according to an embodiment of the present disclosure. As shown in Figure 3, the device for performing view displaying on a table includes a receiving module 301 and an editing module 302. The receiving module 301 is configured to receive an editing instruction of a user on a target image bar in a target view, where the target view is generated based on target data in a preset data table. The editing module 302 is configured to edit the target image bar based on the editing instruction.

It should be noted that, for the specific processing of the receiving module 301 and the editing module 302 of the dev ice for performing view displaying on a table and the technical effects brought by the modules, reference may be made to the relevant descriptions of steps 101 to 102 in the corresponding embodiment of Figure 1, which is not repeated here.

In some optional implementations of this embodiment, the editing instruction includes a creation instruction, and the editing module 302 is further configured to: determine position information of the target image bar based on the creation instruction, where the position information includes a first coordinate and a second coordinate, where the first coordinate is located on a first coordinate axis extending a long a first direct ion in the target view, the second coordinate is located on a second coordinate axis extending along a second direction in the target view, and the first direction is perpendicular to the second direction; and create the target image bar based on the position information.

In some optional implementations of this embodiment, the position information includes a start pos it ion and an end pos it ion; and the edit ing module 302 is further conf igured to: receive a pos it ion selection operat ion of the user in the target view, and acqu ire a start coord i nate and an end coord i nate indicated by the pos it ion selection operat ion, where each of the start coordinate and the end coordinate includes a first coordinate and a second coordinate; and take the start coordinate as the start position, and taking the end coordinate as the end position.

In some optional implementations of this embodiment, the second coordinate axis is a time axis and the second coordinate is a time coordinate, and the editing module 302 is further configured to: determine a time dimension corresponding to the time axis; and create the target image bar based on the time dimension and the position information.

In some optional implementations of this embodiment, the second coordinate axis is a time axis and the second coordinate is a time coordinate, and the device for performing view displaying on a table further includes an adjusting module configured to: after creating the target image bar based on the position information, determine, in response to receiving an instruction for switching a time dimension of the time axis, switched time dimension; and adjust the target image bar based on the switched time dimension.

In some optional implementations of this embodiment, the target view includes a task axis extending along a first direction and a time axis extending along a second direction, the first direction is perpendicular to the second direction, the editing instruction includes a position adjustment instruction for the target image bar displayed in the target view, and the editing module 302 is further configured to adjust, in response to detecting that the user performs a position adjustment operation on the target image bar along the time axis, a time interval corresponding to the target image bar based on the position adjustment operation.

In some optional implementat ions of this embodiment, the editing module 302 is further configured to: acquire, in response to detecting that the user drags a first position of the target image bar along the time axis, a time coordinate corresponding to the target image bar after being dragged, and move the target image bar based on the time coordinate corresponding to the target image bar after being dragged, to change the time interval corresponding to the target image bar; or acquire, in response to detecting that the user drags a second position of the target image bar along the time axis, a time coordinate corresponding to a first edge of the target image bar after being dragged, and move the first edge of the target image bar based on the time coordinate corresponding to the first edge of the target image bar after being dragged, to change the time interval corresponding to the target image bar.

In some optional implementations of this embodiment, the target view includes a task axis extending along a first direction and a time axis extending along a second direction, the first direction is perpendicular to the second direction, and the editing module 302 is further configured to: determine information of a target task associated with the target image bar based on a first task coordinate corresponding to the target image bar on the task axis; and move the target image bar to a time interval corresponding to a second task coordinate on the task axis, and move the information of the target task to the second task coordinate along the task axis.

In some optional implementations of this embodiment, the first task coordinate and the second task coordinate correspond to different task groups, and the editing module 302 is further configured to: move the target image bar from a time interval under the first task coordinate in a first group to a time interval under the second task coordinate in a second group, and move the information of the target task to the second task coordinate a long the task axis.

In some optional implementations of this embodiment, the target view includes a task axis extending along a first direction and a time axis extending along a second direction, the first direction is perpendicular to the second direction, and the device for performing view displaying on a table further includes an identifying module configured to: present a preset control in response to detecting that the user performs a preset operation on a target time coord i nate on the t i me ax is; and set a target information i dent i f i er at the target time coordinate in response to a triggering operation on the preset control performed by the user.

In some optional implementations of this embodiment, the target information identifier includes graphic identification information and/or text identification information; and the identifying module is further configured to: set graphic identification information parallel to the task axis at the target time coordinate; or set graphic identification information extending in a specific direction and parallel to the task axis at the target time coordinate, and set text identification information at a start point or an end point of the graphic identification information.

In some optional implementations of this embodiment, the device for performing view displaying on a table further includes an adding module configured to: display a presentation list in response to receiving an adding instruct ion for adding a target presentat ion item in the target view; and acquire task attribute information newly added by the user in the presentation list, and add the target presentation item based on the task attribute information.

In some optional implementations of this embodiment, the device for performing view displaying on a table further includes a modifying module configured to: receive a modification instruction for target view data in the target view from the user, and acquire modified new view data, where the target view data includes target presentation data in a presentation item corresponding to any task attribute information, the presentation item includes the target presentat ion item; and modify original target data in the preset data table based on the new view data.

In some optional implementations of this embodiment, the editing instruction includes a detai I display instruction, and the editing module 302 is further configured to: present task detail information corresponding to the target image bar, in response to detect i ng that the user performs a preset display operation on the target image bar for instructing to display the task detail information corresponding to the target image bar.

In some optional implementations of this embodiment, the editing instruction includes a deletion instruction, and the editing module 302 is further configured to: present an editing selection option for the target image bar based on a detected first selection operation performed by the user on the target image bar, where the editing selection option includes a deletion selection option; and delete the target image bar based on a second selection operation performed by the user on the deletion selection option.

In some optional implementations of this embodiment, the editing module 302 is further configured to: move the target image bar in the target view, in response to receiving a position adjustment instruction included in the editing instruction; and acquire pos it ion information of the target image bar after being moved in the target view, and modify a first field data in a record page of the target image bar based on the position information of the target image bar after being moved in the target view.

In some optional implementations of this embodiment, the editing modu Ie 302 is further configured to: acquire a second field data of the target image bar corresponding to the editing instruction; and modify original target data in the preset data table based on edited second field data.

Reference is made to Figure 4, which is an exemplary system architecture to which a method for performing view displaying on a table according to an embodiment of the present disclosure may be applied.

As shown in Figure 4, the system architecture may include terminal devices 401, 402, and 403, a network 404, and a server 405. The network 404 is a medium used to provide a communication link between the terminal devices 401, 402, 403 and the server 405. The network 404 may include var i ous connect i on types, such as wired, wireless communication links, or fiber optic cables. The above-mentioned terminal dev ices and server may use any currently known or future developed network protocols such as HTTP (Hyper Text Transfer Protocol) to communicate, and may be connected with a digital data communication in any form or medium (for example, a communication network). Examples of the communication network include a local area network ("LAN"), a wide area network ("WAN"), an internet (e.g., the Internet), and a peer-to-peer network (e. g., Ad hoc peer-to-peer network), as well as any currently known or future development network.

The terminal devices 401, 402, and 403 may interact with the server 405 through the network 404 to receive or send messages and the like. Various client applications, such as video publishing applications, search applications, and news information applications, may be installed on the terminal devices 401, 402 and 403.

The terminal devices 401, 402, and 403 may be hardware or software. When the terminal devices 401, 402, and 403 are hardware, they may be various electronic dev ices that have a display screen and support web browsing, including but not I imited to smart phones, tablet computers, e-book readers, MP3 players (Moving Picture Experts Group Audio Layer III), MP4 (Moving Picture Experts Group Audio Layer IV) players, laptops and desktops, etc. When the terminal devices 401, 402, and 403 are software, they may be installed in the electronic devices listed above. They may be implemented as multiple software or software modules (e. g., software or software modules for providing distributed services), or may be implemented as a single software or software module, which is not limited here.

The server 405 may be a server that can provide various services, such as receiving Gantt chart acquiring requests sent by terminal devices 401, 402, and 403, analyzing and process i ng the Gantt chart acqu i ring requests, and send i ng an analyzing and processing result (for example, Gantt chart data corresponding to the above-mentioned acquiring requests) to the terminal devices 401, 402, and 403.

It should be noted that the method for performing view displaying on a table provided by the embodiment of the present disclosure may be executed by a terminal device, and correspondingly, a device for performing view displaying on a table may be arranged in the terminal device.

It should be understood that the numbers of terminal devices, networks and servers in Figure 4 are merely illustrative. There may be any number of terminal devices, networks and servers according to implementation needs.

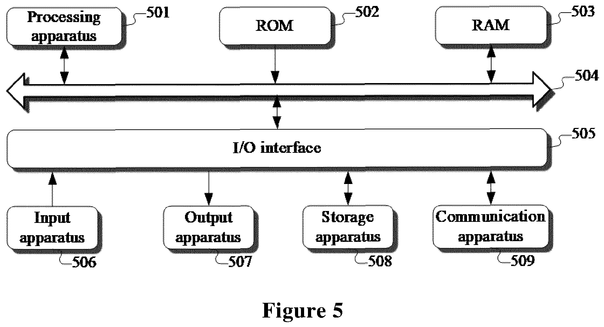

Reference is made to Figure 5, which is a schematic structural diagram of an electronic device (e. g. , the terminal device in Figure 4) for implementing the embodiments of the present disclosure. The electronic device shown in Figure 5 is only an example, and should not impose anylimitation on the function and usage scope of the embodiments of the present disclosure.

As shown in Figure 5, the electronic device may include a processing apparatus (such as a centra! processor and a graphic processor) 501. The processing apparatus may perform various appropriate actions and processing by executing programs stored in a read-only memory (ROM) 502 or programs uploaded from a storage apparatus 508 to a random access memory (RAM) 503. Var i ous programs and data required for operations of the electronic device are also stored in the RAM 503. The processing apparatus 501, the ROM 502 and the RAM 503 are connected to each other through the bus 504. An input/output (I/0) interface 505 is also connected to the bus 504.

Generally, the following components are connected to the I/0 interface 505: an input apparatus 506 such as a touch screen, a touch panel, a keyboard, a mouse, a camera, a microphone, an accelerometer, and gyroscope; an output apparatus 507 such as a liquid crystal display (LCD), a loudspeaker and a vibrator; a storage apparatus 508 such as a magnetic tape and a hard disk; and a communication apparatus 509. The communication apparatus 509 may allow the electronic device to communicate with other device in a wired or wireless manner to exchange data. Although Figure 5 shows the electronic device provided with various apparatuses, it should be understood that not all shown apparatuses are necessary. Alternatively, more or less apparatuses may be included.

According to the embodiments of the present disclosure, a process described in the flowchart may be implemented by computer software programs. For example, according to an embodiment of the present disclosure, a computer program product including computer program carr ied on a computer-readable medium is provided. The computer program includes program codes for performing the method shown in the flowchart. In such embodiment, the computer program may be downloaded and installed from the network through the communication apparatus 509, installed from the storage apparatus 508 or installed from the ROM 502. The computer program is executed by the processing apparatus 501 to perform functions defined in the methods described in the embodiments of the present disclosure.

It should be noted that, the computer-readable medium described in the present disclosure may be a computer-readable signal med i um, a computer-readable storage medium or any combination thereof. The computer-readable storage medium may include but not limited to a system, an apparatus or a device in an electric, magnetic, optical, electromagnetic, infrared or a semiconductor form, or any combination thereof. The computer-readable storage medium may include but not I imited to electric connect ion of one or more wires, a portable computer magnet ic disk, a hard disk, a random access memory (RAM), a read-only memory (ROM), an erasable programmable read only memory (EPROM or a flash memory), an optical fiber, a portable compact disk read only memory (CD-ROM), an optical storage device, a magnetic storage device or any combination thereof. In the present disclosure, the computer-readable storage medium may be a tangible medium including or storing programs. The programs may be used by an instruction execution system, apparatus or device, or may be used in combination with the instruction execution system, apparatus or device. In the present disclosure, a computer-readable signal medium may include a data signal in a baseband or propagated as a part of carrier. The computer-readable signal medium carries computer-readable program codes. The propagated data signa I may include but not limited to an electromagnetic signal, an optical signal or any combination thereof. The computer-readable signal medium may be any computer-readable medium other than the computer-readable storage medium. The computer-readable signal medium may send, propagate or transmit programs used by the instruction execution system, apparatus or device or the programs used in combination with the instruction execution system, apparatus or device. The program code included in the computer-readable medium may be transmitted via any appropriate medium, including but not limited to an electric wire, an optical fiber, radio frequency (RF) or any appropriate combination thereof.

The above-mentioned computer-readable medium may be included in the above-mentioned electronic device; or may exist alone without being assembled into the electronic device.

The above-mentioned computer-readable medium carries one or more programs, and the above-mentioned one or more programs, when executed by the electronic device, cause the electronic device to: receive an editing instruction of a user on a target image bar in a target view, where the target view is generated based on target data in a preset data table; and edit the target image bar based on the editing instruction.

Computer program codes for performing operations of the present disclosure may be written by using one or more program design language or any combination. The program design language includes but not limited to object oriented program design language such as Java, Smalltalk and C++, and further includes conventional process-type program design language such as "C" or similar program design language. The program codes may be completely or partially executed on a user computer, performed as an independent software packet, partially executed on the user computer and partially executed on a remote computer, or completely executed on the remote computer or a server. In a case of involving the remote computer, the remote computer may connect to the user computer via any type of network such as a local area network (LAN) and a wide area network (WAN). Alternatively, the remote computer may connect to an external computer (such as achieving internet connection by services provided by the internet network service provider).

The flowcharts and block diagrams shown in the drawings show a system architecture, function and operation which may be implemented by the system, method and computer program product according to the embodiments of the present disclosure. Each block in the flowcharts or the block diagram may represent a part of a module, a program section or codes including executable instructions for implementing specified logic functions. It should be noted that, in alternative embodiment, functions denoted in the blocks may be performed in an order different from the order denoted in the drawing. For example, operations in two blocks connected successively may be performed in parallel, or may be performed in an opposite order, depending on the involved function. It should be noted that, each block in the block diagrams and/or flowcharts, and a combination of blocks in the block diagrams and/or flowcharts may be implemented by a dedicated hardware system for performing specified funct ions or operat ions, or may be implemented by a combination of dedicated hardware and computer instructions.

Units involved in the embodiments of the present disclosure may be implemented by software or hardware. Names of the units do not limit the units in a certain case. For example, the editing module 302 may also be described as "a module for editing a target image bar based on an editing instruction".

The functions described above may be partially performed by one or more hardware logic components. For example, non-restrictively, exemplary types of hardware logic components that may be used include: a field programmable gate array (FPGA), an application specific integrated circuit (ASIC), an application specific standard product (ASSP), a system on chip (SOC), a complex programmable logic device (CPLD) and so on.

In the context of the present disclosure, the machine readable medium may be a tangible medium including or storing programs. The programs may be used by an instruction execution system, apparatus or device, or may be used in combination with the instruction execution system, apparatus or device. The machine readable medium may be a machine readable signal medium or a machine readable storage medium. The machine readable medium may include but not I imi ted to a system, an apparatus or a device in an electric, magnetic, optical, electromagnetic, infrared or a semiconductor form, or any combination thereof. The machine readable storage medium may include but not limited to electric connect ion of one or more wi res, a portable computer magnet ic disk, a hard disk, a random access memory (RAM), a read-on ly memory (ROM), an erasable programmable read on Iy memory (EPROM or a flash memory), an optical fiber, a portable compact disk read only memory (CD-ROM), an optical storage device, a magnetic storage device or any combination thereof.

The preferred embodiments and the technical principles of the present disclosure are described above. It should be understood by those skilled in the art that, the protection scope of the present disclosure is not limited to the technical solutions formed by specific combination of the above technical features, and other technical solutions formed by random combinations of the above technical features or equivalent features without departing from the concept of the present disclosure also fall within the protection scope of the present disclosure, for example the technical solution formed by replacement between the above technical features and technical features with similar functions disclosed (not limited) in the present disclosure.

Although the operat ions are described in a specific order, the operat ions are unnecessari ly to be performed in the specific order or in a chronological order. In a certain environment, a multi-task and parallel processing may be beneficial. Although specific detaiIs are described above, the detaiIs should not be understood as restriction to the scope of the present disclosure. Some features described in the context of different embodiments may be combined in one embodiment. Alternatively, the features described in the context of one embodiment may be implemented in multiple embodiments independently or in any appropriate sub-combination.

The subject matter is described by language specific to the structure feature and/or method logic, it should be understood that the subject matter defined in the appended claims is not I imited to the specific features or actions described above. The specific features and actions are only schematic implementation of the claims.

## Claims

1. A method for performing view displaying on a table, the method comprising:
receiving an editing instruction of a user on a target image bar in a target view, wherein the target view is generated based on target data in a preset data table; and
editing the target image bar based on the editing instruction.

2. The method according to claim 1, wherein the editing instruction comprises a creation instruction, and
the editing the target image bar based on the editing instruction comprises:
determining position information of the target image bar based on the creation instruction, wherein the position information comprises a first coordinate and a second coordinate, wherein the first coordinate is located on a first coordinate axis extending along a first direction in the target view, the second coordinate is located on a second coordinate axis extending along a second direction in the target view, and the first direction is perpendicular to the second direction; and
creating the target image bar based on the position information.

3. The method according to claim 2, wherein the position information comprises a start position and an end position; and
the determining position information of the target image bar based on the creation instruction comprises:
receiving a position selection operation of the user in the target view, and acquiring a start coordinate and an end coordinate indicated by the position selection operation, wherein each of the start coordinate and the end coordinate comprises a first coordinate and a second coordinate; and
taking the start coordinate as the start position, and taking the end coordinate as the end position.

4. The method according to claim 2, wherein the second coordinate axis is a time axis and the second coordinate is a time coordinate, and
the creating the target image bar based on the position information comprises:
determining a time dimension corresponding to the time axis; and
creating the target image bar based on the time dimension and the position information.

5. The method according to claim 2, wherein the second coordinate axis is a time axis and the second coordinate is a time coordinate, and
after creating the target image bar based on the position information, the method further comprises:
determining, in response to receiving an instruction for switching a time dimension of the time axis, switched time dimension; and
adjusting the target image bar based on the switched time dimension.

6. The method according to claim 1, wherein the target view comprises a task axis extending along a first direction and a time axis extending along a second direction, the first direction is perpendicular to the second direction, the editing instruction comprises a position adjustment instruction for the target image bar displayed in the target view, and
the editing the target image bar based on the editing instruction comprises:
adjusting, in response to detecting that the user performs a position adjustment operation on the target image bar along the time axis, a time interval corresponding to the target image bar based on the position adjustment operation.

7. The method according to claim 6, wherein the adjusting, in response to detecting a position adjustment operation performed by the user on the target image bar along the time axis, a time interval corresponding to the target image bar based on the position adjustment operation comprises:
acquiring, in response to detecting that the user drags a first position of the target image bar along the time axis, a time coordinate corresponding to the target image bar after being dragged, and moving the target image bar based on the time coordinate corresponding to the target image bar after being dragged, to change the time interval corresponding to the target image bar; or
acquiring, in response to detecting that the user drags a second position of the target image bar along the time axis, a time coordinate corresponding to a first edge of the target image bar after being dragged, and moving the first edge of the target image bar based on the time coordinate corresponding to the first edge of the target image bar after being dragged, to change the time interval corresponding to the target image bar.

8. The method according to claim 1, wherein the target view comprises a task axis extending along a first direction and a time axis extending along a second direction, the first direction is perpendicular to the second direction, and
the editing the target image bar based on the editing instruction comprises:
determining information of a target task associated with the target image bar based on a first task coordinate corresponding to the target image bar on the task axis; and
moving the target image bar to a time interval corresponding to a second task coordinate on the task axis, and moving the information of the target task to the second task coordinate along the task axis.

9. The method according to claim 8, the first task coordinate and the second task coordinate correspond to different task groups; and
the moving the target image bar to a time interval corresponding to a second task coordinate on the task axis, and moving the information of the target task to the second task coordinate along the task axis comprises:
moving the target image bar from a time interval under the first task coordinate in a first group to a time interval under the second task coordinate in a second group, and moving the information of the target task to the second task coordinate along the task axis.

10. The method according to claim 1, wherein the target view comprises a task axis extending along a first direction and a time axis extending along a second direction, the first direction is perpendicular to the second direction, and the method further comprises:
presenting a preset control in response to detecting that the user performs a preset operation on a target time coordinate on the time axis; and
setting a target information identifier at the target time coordinate in response to a triggering operation on the preset control performed by the user.

11. The method according to claim 10, wherein the target information identifier comprises graphic identification information and/or text identification information; and
the setting a target information identifier at the target time coordinate in response to a triggering operation on the preset control performed by the user comprises:
setting graphic identification information parallel to the task axis at the target time coordinate; or
setting graphic identification information extending in a specific direction and parallel to the task axis at the target time coordinate, and setting text identification information at a start point or an end point of the graphic identification information.

12. The method according to claim 1, further comprising:
displaying a presentation list in response to receiving an adding instruction for adding a target presentation item in the target view; and
acquiring task attribute information newly added by the user in the presentation list, and adding the target presentation item based on the task attribute information.

13. The method according to claim 12, further comprising:
receiving a modification instruction for target view data in the target view from the user, and acquiring modified new view data, wherein the target view data comprises target presentation data in a presentation item corresponding to any task attribute information, the presentation item comprises the target presentation item; and
modifying original target data in the preset data table based on the new view data.

14. The method according to claim 1, wherein the editing instruction comprises a detail display instruction, and the editing the target image bar based on the editing instruction comprises:
presenting task detail information corresponding to the target image bar, in response to detecting that the user performs a preset display operation on the target image bar for instructing to display the task detail information corresponding to the target image bar.

15. The method according to claim 1, wherein the editing instruction comprises a deletion instruction, and the editing the target image bar based on the editing instruction comprises:
presenting an editing selection option for the target image bar based on a detected first selection operation performed by the user on the target image bar, wherein the editing selection option comprises a deletion selection option; and
deleting the target image bar based on a second selection operation performed by the user on the deletion selection option.

16. The method according to claim 1, wherein the editing the target image bar based on the editing instruction comprises:
moving the target image bar in the target view, in response to receiving a position adjustment instruction comprised in the editing instruction; and
acquiring position information of the target image bar after being moved in the target view, and modifying a first field data in a record page of the target image bar based on the position information of the target image bar after being moved in the target view.

17. The method according to claim 1, wherein the editing the target image bar based on the editing instruction comprises:
acquiring a second field data of the target image bar corresponding to the editing instruction; and
modifying original target data in the preset data table based on edited second field data.

18. A device for performing view displaying on a table, the device comprising:
a receiving module, configured to receive an editing instruction of a user on a target image bar in a target view, wherein the target view is generated based on target data in a preset data table; and
an editing module, configured to edit the target image bar based on the editing instruction.

19. An electronic device comprising:
one or more processors;
a storage apparatus storing one or more programs, the one or more programs, when executed by the one or more processors, causing the one or more processors to perform the method according to any one of claims 1-17.

20. A computer-readable medium storing a computer program, the computer program, when executed by a processor, causing the processor to perform the method according to any one of claims 1-17.
